Europäisches Patentamt

European Patent Office

Office européen des brevets

(19)

(11) Publication number: **0 213 928 B1**

(12) **EUROPEAN PATENT SPECIFICATION**

(45) Date of publication of patent specification: **26.08.92**   (51) Int. Cl.⁵: **G01D 11/28**, G12B 11/00

(21) Application number: **86306609.8**

(22) Date of filing: **27.08.86**

(54) **Use of filtered illuminating device in starlight observation system.**

(30) Priority: **27.08.85 JP 130728/85 U**

(43) Date of publication of application:
**11.03.87 Bulletin 87/11**

(45) Publication of the grant of the patent:
**26.08.92 Bulletin 92/35**

(84) Designated Contracting States:
**DE FR GB**

(56) References cited:
**EP-A- 0 029 638**
**EP-A- 0 131 473**
**DE-A- 2 930 769**
**DE-A- 3 313 899**
**GB-A- 2 154 741**

(73) Proprietor: **Nagai, Kiyoshi**
**228-91, Sachigawa**
**Oomiya-shi Saitama(JP)**

(72) Inventor: **Nagai, Kiyoshi**
**228-91, Sachigawa**
**Oomiya-shi Saitama(JP)**

(74) Representative: **Arthur, Bryan Edward et al**
**Withers & Rogers 4 Dyer's Buildings Holborn**
**London EC1N 2JT(GB)**

Rank Xerox (UK) Business Services

## Description

This invention relates to the use of a display incorporating a light filter in conjunction with an observation system utilising starlight as the light source.

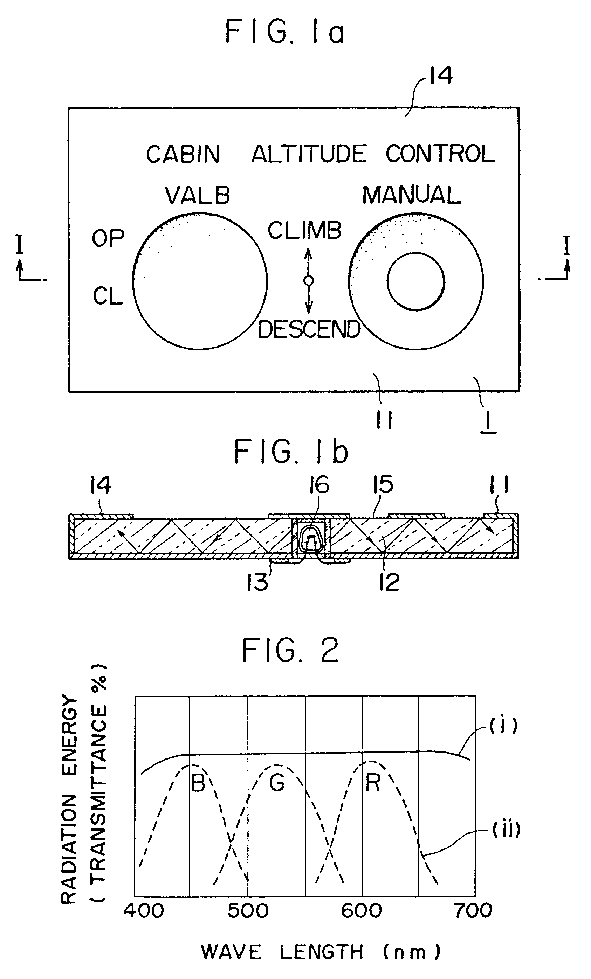

There is known an illuminating display device of light-directing type. A representative structure of the known illuminating display device is schematically illustrated in Figs. 1a and 1b, in which Fig. 1a is a perspective view of the device and Fig. 1b is a section view taken along the line I-I in Fig. 1a. In the figures, a display panel 1 gives an illuminating image or pattern which can be noted from the outside. The light for providing such illumination is supplied through a transparent organic resin plate 12 from an incandescent lamp 16 embedded around the center of the resin plate 12. The resin plate 12 is provided under the display panel 1. The electric power for the lamp can be supplied from an electroconductive layer 13 provided on the back surface of the resin plate 12. The electric power can be supplied in other ways. The display panel is made of a light-reflective sheet and has one or more patterned window portions for allowing transmission of the light supplied from the resin plate. There can be provided a white powder such as glass powder on the resin plate and in the window area of the display panel so as to diffuse the transmitted light for giving uniform illumination.

Upon receipt of electric power, the incandescent lamp 16 emits light which is then diffused in the resin plate 12 by multiple reflection in the manner shown by the arrows in Fig. 1b. Therefore, it can be said that the resin plate 12 as such functions as a light source as long as the lamp 16 constantly and stably supplies light to the resin plate 12.

The incandescent lamp emits a light over a wide radiation spectrum ranging from a low wavelength region to a long wavelength region as is shown by (i) in Fig. 2. Therefore, the color of illumination can be easily varied by placing a filter or filters of blue, green and/or red over or around the lamp.

Technology for detecting an image in a dark field such as the dark night sky with no moonlight has been recently developed. This technology utilizes starlight as the light source and its detection system contains a multi-channeled plate and a photoelectric conversion element matching with the starlight source.

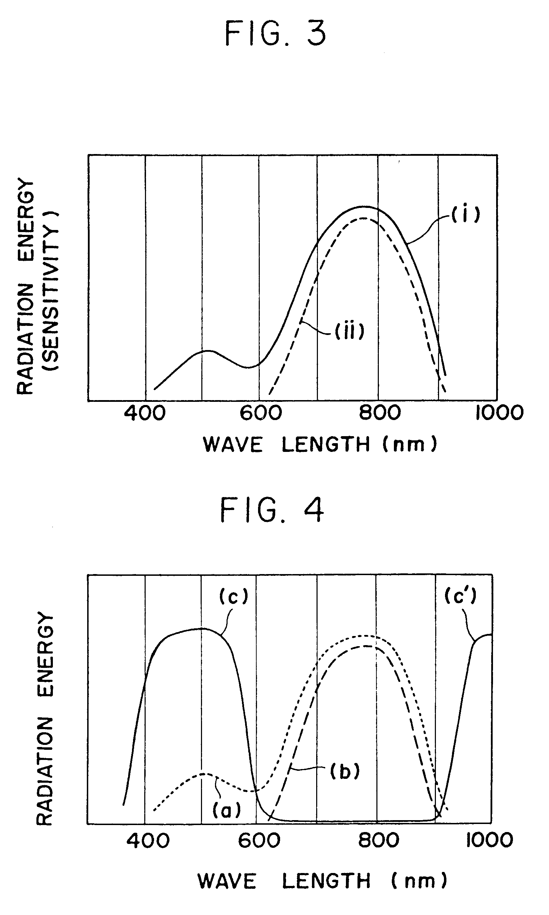

It is known that in one day the earth goes through a region of space in which approx. a hundred thousand stars are dispersed. Although most of the stars emit light, the ultraviolet (UV) rays emitted by new-born stars (aged 100,000 - 1,000,000 years) are scattered or absorbed in the atmospheric gas, etc. so that the UV rays hardly reach the surface of the earth. Conversely, the near infrared (IR) rays emitted by stars aged approx. $5 \times 10^6$ years reach the surface of the earth. The spectrum of light emitted by the stars and received by the earth is shown in Fig. 3 as the curve (i). Accordingly, the photoelectric conversion element employed in the system has, for instance, photoelectric conversion characteristics as shown in Fig. 3 as the curve (ii). This means that a light having a radiation spectrum in the region of 600 to 800 nm (or up to 900 nm) is multiplied by the photoelectric conversion element.

An observation system utilizing starlight has been developed and is now employed generally for military and police work, because such an observation system needs no employment of artificial light.

Since the above observation system utilizes a multi-channeled secondary electron multiplier, the gain is at very high level. The detection device employed for the observation system contains a number of artificial light sources such as a lighting device, various illuminating display devices, etc., most of which emit light having a radiation spectrum overlapping in part with the radiation spectrum of starlight. Particularly, the radiation spectrum of an incandescent lamp (which is generally employed as a light source) overlaps considerably with the radiation spectrum of moonlight. Generally, the luminance of light emitted by these artificial light sources is several millions times to several ten millions times as high as that of the starlight. Therefore, if any light of the artificial light source is incidentally received in the visual field directed to eyes of the observer, not only does such light cause noise but also the highly amplified artificial light causes burning and further destroys the retinas of the observer's eyes.

EP-A-131,473 (in the name of the present applicant) discloses a composite filter for use in an observation system utilising starlight as the light source, the filter comprising a glass plate with an organic film thereon. The glass plate absorbs light in the range 600 to 700 nm and the organic film absorbs light in the range of 700 to 900 nm. EP-A-131,473 also discloses a filamentary display device for use in such a starlight observation system, the display device comprising a casing - enclosing coiled filaments and having a transparent window portion provided with such a composite filter.

DE-A-3,313,899 discloses the use of a display in conjunction with an observation system utilising starlight as the light source, the display comprising a lamp and a filter which essentially absorbs light from the lamp in the region of the spectrum having a wavelength greater than 650 nm.

In accordance with the present invention, a display as disclosed in DE-A-3,313,899 is used in conjunction with an observation system utilising starlight as the light source, characterised in that the lamp is an incandescent lamp, and is incorporated in an integral lamp assembly comprising a transparent casing which encases the lamp bulb, a wall portion of said casing which surrounds the side portion of the lamp bulb functioning as said filter to essentially absorb light from the lamp in said region of the spectrum.

Preferably said wall portion selectively absorbs light of wavelength longer than 600 nm under the condition that transmission of light at 650 nm is defined to a level of $1 \times 10^{-4}$% to 5 % (preferably more than $1 \times 10^{-3}$%) and transmission of light in the region 700 - 800 nm is defined to a level of lower than $2 \times 10^{-5}$%.

Further preferred features of the invention are defined in the dependent claims.

A preferred embodiment of the invention is described below by way of example only with reference to the accompanying drawings, wherein:

Fig. 1a is a perspective view of a known illuminating display device and Fig. 1b is a section view taken along the line I-I in Fig. 1a.

Fig. 2 shows spectra in which (i) is a radiation spectrum of a light emitted by a incandescent lamp and (ii)-B, (ii)-G and (ii)-R are transmission spectra of blue filter, green filter and red filter, respectively.

Fig. 3 shows spectra in which (i) is a radiation spectrum of light emitted by the stars and received by the earth, and (ii) is a representative photoelectric conversion spectrum of a light conversion element used in the conventional night-observation system.

Fig. 4 shows spectra which (a) is a radiation spectrum of light emitted by the stars and received by the earth, (b) shows representative photoelectric conversion spectrum of a light conversion element used in a night-observation system, (c) is a radiation spectrum of light favorably employed in combination with the night-observation system, and (c') is a portion of the spectrum (c) in the region of red rays.

Fig. 5 shows a typical spectrum of transmittance of a wall portion of the casing surrounding a side portion of a lamp for use in accordance with the present invention, the wall portion functioning as filter (F).

Fig. 6 shows a representative illuminating device for use according to the invention.

Fig. 7 shows a typical spectrum of transmittance of a wall portion of the casing surrounding a side portion of the lamp, the wall portion functioning as red filter.

Fig. 8 shows a typical spectrum of transmittance of a wall portion of the casing surrounding a side portion of the lamp, the wall portion functioning as yellow filter.

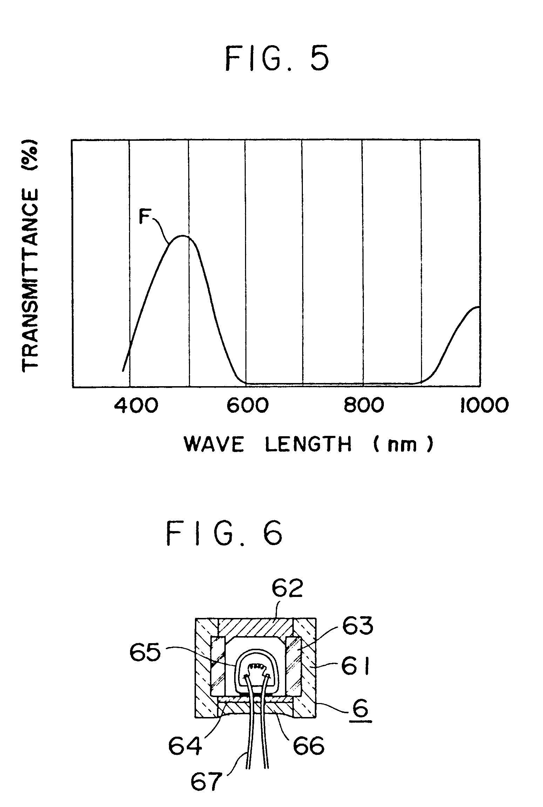

In Fig. 6, the illuminating device 6 comprises an incandescent lamp 65 and a transparent casing 61 which encases the lamp 65. Over the lamp 65 is provided a reflective plate 62 to keep the light emitted from the lamp 65 from transmission therethrough. The reflective plate can be made of aluminum metal or other material with a plated reflective metal layer. The wall portion of the casing 61 surrounding the side portion of the lamp 65 is made to function as a filter for absorbing almost all light of a radiation spectrum in the region of longer than 650 nm from the light emitted by the incandescent lamp. The wall portion of the casing 61 can be provided with other material 63 functioning as a filter. The lamp 65 is fixed on a substrate 64, and the lamp 65 and the substrate 64 are sealed by a sealing means 66 such as an nonconductive resin. The lamp 65 is connected to a power source (not illustrated) via lead lines 67.

As is indicated in Fig. 4, in view of the radiation spectrum (a) of light emitted by the stars and received by the earth and the photoelectric conversion spectrum (b) of a light conversion element used in the conventional night-observation system, a light favorably usable in combination with the night-observation system is a light having a radiation spectrum (c). In the spectrum (c), (c') means a portion of the spectrum (c) in the region of red rays. The high transmission of a light in the red region is effective to keep the filter from generation of heat.

It is very disadvantageous and expensive to manufacture an incandescent lamp giving the radiation spectrum (c) in Fig. 4. Accordingly, the side wall portion of the casing of the illuminating device for use according to the invention is made of a material which serves as a filter to absorb or intercept a light in the wavelength region of longer than 650 nm. The filter material preferably transmits light in the red region such as light in the wavelength region of longer than 900 nm. A typical spectrum of transmittance of a wall portion of the casing surrounding a side portion of the lamp for use according to the invention is indicated in Fig. 5 by F.

The wall portion of the casing serving as filter in the illuminating device for use according to the present invention is preferably designed for intercepting the light of a radiation spectrum in the region of 600 - 900 nm, and preferably comprises at least one organic resin and at least one glass filter. The glass filter is indicated in Fig. 6 by the numeral 63.

The organic resin filter preferably absorbs light of a radiation spectrum in the region of 760 - 700 nm and can be prepared, for instance, from an organic polymer such as polycarbonate resin, polyacryl resin, polyester resin, cellulose derivative (e.g., cellulose diacetate, cellulose triacetate, etc.) dyed with an appropriate dye having an absorption spectrum in the region of 650 - 700 nm. Examples of the appropriate dye include Zapon BG (Registered Trade Mark available from BASF A.G.). The dye can be used singly or in combination, the latter being adoptable for adjusting the absorption spectrum to a more appropriate region.

The glass filter preferably absorbs light of a radiation spectrum in the region of 700 - 900 nm, and can be a glass plate colored with a cobalt-containing salt or other coloring material having an absorption spectrum in the region of 700 - 900 nm. The glass plate generally is phosphate glass. The coloring material can be employed singly or in combination, the latter being adoptable for adjusting the absorption spectrum to a more appropriate region.

The glass filter generally has a thickness in the range of 0.1 - 10 mm, more preferably in the range of 0.5 -5 mm. Such glass filter can be prepared in a conventional manner.

In some night observation system, a warning light such as yellow light and red light is employed in combination with the illuminating device to warn the observer in the case of emergency. In such systems, the observer should be noticed that the emergency arises. Accordingly, the filter sometimes is advantageous to allow transmission of a small quantity of light of the yellow region to the red region,

For this reason, the wall portion of the casing of the illuminating device can be made to absorb a light of a radiation spectrum in the region of longer than 600 nm under the condition that the transmission of light at 650 nm is defined to a level of $1 \times 10^{-4}$ to 5% and average transmission of light in the region 700 - 800 nm is defined to a level of lower than $2 \times 10^{-5}$%.

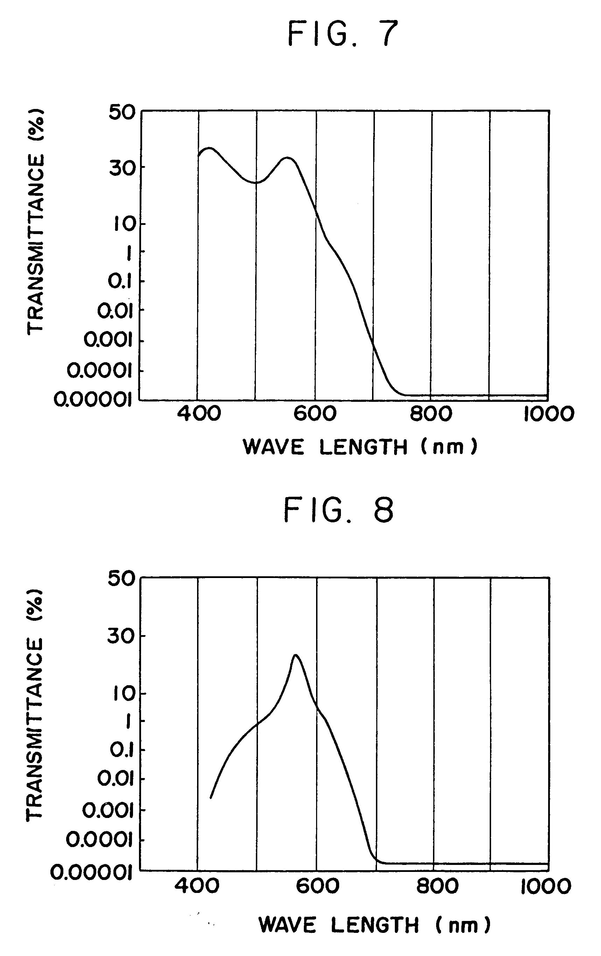

Figs. 7 and 8 show typical spectra of transmittance of a wall portion of the casing surrounding a side portion of the lamp in which the wall portion functions as a red filter and a yellow filter, respectively. Such filter wall can be prepared by a combination of a dyed organic resin and a dyed glass filter, in similar manners to the manner as is described before.

## Claims

1. The use of a display in conjunction with an observation system utilising starlight as the light source, the display comprising a lamp (65) and a filter (63) which essentially absorbs light from the lamp in the region of the spectrum having a wavelength greater than 650 nm, characterised in that the lamp (65) is an incandescent lamp, and is incorporated in an integral lamp assembly (6) comprising a transparent casing (61) which encases the lamp bulb, a wall portion (63) of said casing which surrounds the side portion of the lamp bulb (65) functioning as said filter to essentially absorb light from the lamp in said region of the spectrum.

2. Use as claimed in claim 1, wherein said wall portion (63) is composed of a dyed glass and a dyed organic resin filter, the dyed glass filter being located adjacent the lamp bulb (65).

3. Use as claimed in claim 2, wherein said dyed organic resin filter has an absorption spectrum in the range 650 nm to 700 nm.

4. Use as claimed in any preceding claim, wherein said portion (63) absorbs light from said lamp (65) in the 600 nm to 900 nm region of the spectrum.

5. Use as claimed in any of claims 1 to 3, wherein the transmission of light of wavelength 650 nm by said wall portion (63) is defined to a level of $1 \times 10^{-4}$% to 5% and the average transmission of light in the region 700 nm to 800 nm is defined to a level of lower than $2 \times 10^{-5}$%.

6. Use as claimed in any preceding claim wherein said wall portion (63) transmits light in the region of the spectrum of wavelength greater than 900 nm.

7. Use as claimed in any preceding claim wherein the top portion of said casing (61) is provided with a reflector (62) which covers the top portion of said lamp (65).

## Patentansprüche

1. Verwendung eines Display in Verbindung mit einem Sichtgerät, das Sternenlicht als Lichtquelle benutzt, wobei das Display eine Lampe (65) und ein Filter (63) aufweist, das im wesentlichen Licht der Lampe in dem Spektralbereich mit einer Wellenlänge von mehr als 650 nm absorbiert, dadurch gekennzeichnet, daß die Lampe (65) eine Glühlampe ist und in einer einheitlichen Lampenanordnung (6) aufgenommen ist, die eine transparente Umhüllung (61) aufweist, die den Lampenkolben umschließt, wobei ein Wandteil (63) der genannten Umhüllung, der den Seitenteil des Lampenkolbens (65) umgibt, als das genannte Filter wirkt, um im wesentlichen Licht der Lampe in dem genannten Spektralbereich zu absorbieren.

2. Verwendung nach Anspruch 1, bei der der genannte Wandteil (63) aus einem Filter aus einem gefärbten Glas und einem Filter aus einem gefärbten organischen Harz gebildet ist, wobei der Filter aus gefärbtem Glas dem Lampenkolben (35) nächstliegend angeordnet ist.

3. Verwendung nach Anspruch 2, bei der das genannte Filter aus gefärbtem organischen Harz ein Absorptionsspektrum im Bereich von 650 nm bis 700 nm besitzt.

4. Verwendung nach irgendeinem vorausgehenden Anspruch, bei der der genannte Teil (63) Licht der genannten Lampe (65) in dem Spektralbereich von 600 nm bis 900 nm absorbiert.

5. Verwendung nach einem der Ansprüche 1 bis 3, bei der die Durchlässigkeit von Licht der Wellenlänge 650 nm durch den genannten Wandteil (63) auf einen Pegel von $1 \times 10^{-4}$ % bis 5 % begrenzt ist und die durchschnittliche Durchlässigkeit von Licht in dem Bereich von 700 nm bis 800 nm auf einen Pegel von weniger als $2 \times 10^{-5}$ % begrenzt ist.

6. Verwendung nach irgendeinem vorausgehenden Anspruch, bei der der genannte Wandteil (63) Licht im Spektralbereich von Wellenlängen von mehr als 900 nm durchläßt.

7. Verwendung nach irgendeinem vorausgehenden Anspruch, bei der der Oberteil des genannten Gehäuses (61) mit einem Reflektor (62) versehen ist, der den oberen Teil der genannten Lampe (65) bedeckt.

**Revendications**

1. Utilisation d'un dispositif d'éclairage dans un système d'observation utilisant la lumière des étoiles comme source de lumière, le dispositif d'éclairage comprenant une lampe (65) et un filtre (63) qui absorbe essentiellement la lumière provenant de la lampe dans la région du spectre de longueur d'onde supérieure à 650 nm, caractérisée en ce que la lampe (65) est une lampe à incandescence, incorporée dans un ensemble de lampe intégré (6) comprenant un logement transparent (61) qui entoure l'ampoule de la lampe, une portion de paroi (63) de ce logement qui entoure la portion latérale de l'ampoule de la lampe (65) fonctionnant comme filtre pour absorber essentiellement la lumière provenant de la lampe dans ladite région du spectre.

2. Utilisation selon la revendication 1, caractérisée en ce que cette portion de paroi (63) est composée d'un verre teinté et d'un filtre de résine organique teintée, le filtre de verre teinté étant adjacent à l'ampoule de la lampe (65).

3. Utilisation selon la revendication 2, caractérisée en ce que le spectre d'absorption dudit filtre de résine organique teinté comprend la zone de 650 à 700 nm.

4. Utilisation selon l'une quelconque des revendications précédentes, caractérisée en ce que ladite portion (63) absorbe la lumière de ladite lampe (65) dans la région du spectre comprise entre 600 et 900 nm.

5. Utilisation selon l'une quelconque des revendications 1 à 3, caractérisée en ce que la transmission de la lumière d'une longueur d'onde de 650 nm par cette portion de paroi (63) a un niveau de $1 \times 10^{-4}$ à 5% et en ce que la transmission moyenne de la lumière d'une longueur d'onde de 700 à 800 nm a un niveau inférieur à $2 \times 10^{-5}$%.

6. Utilisation selon l'une quelconque des revendications précédentes, caractérisée en ce que ladite portion de paroi (63) transmet la lumière dans la région du spectre de longueur d'onde supérieure à 900 nm.

7. Utilisation selon l'une quelconque des revendications précédentes, caractérisée en ce que la portion supérieure dudit logement (61) est pourvue d'un réflecteur (62) qui recouvre la partie supérieure de ladite lampe (65).

# FIG. 1a

CABIN ALTITUDE CONTROL

# FIG. 1b

# FIG. 2

# FIG. 3

# FIG. 4

# FIG. 5

# FIG. 6

## FIG. 7

## FIG. 8